(19) Europäisches Patentamt
European Patent Office
Office européen des brevets

(11) **EP 2 386 987 B1**

(12) **EUROPEAN PATENT SPECIFICATION**

(45) Date of publication and mention
of the grant of the patent:
**11.09.2013 Bulletin 2013/37**

(51) Int Cl.:
*G06N 3/04* *(2006.01)* *G06N 3/08* *(2006.01)*
*H04W 28/00* *(2009.01)*

(21) Application number: **10305409.4**

(22) Date of filing: **20.04.2010**

(54) **A method of reinforcement learning, corresponding computer program product, and data storage device therefor**

Verfahren zum bestärkenden Lernen, entsprechendes Computerprogrammprodukt und Datenspeichervorrichtung dafür

Procédé de renforcement de l'apprentissage, produit de programme informatique correspondant et dispositif de stockage de données correspondant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.11.2011 Bulletin 2011/46**

(73) Proprietor: **Alcatel Lucent**
**75007 Paris (FR)**

(72) Inventors:
• **Razavi, Rouzbeh**
**15, Dublin (IE)**
• **Claussen, Holger**
**Straffan, Co. Kildare (IE)**
• **Ho, Lester**
**15, Dublin (IE)**

(74) Representative: **ALU Antw Patent Attorneys**
**Copernicuslaan 50**
**2018 Antwerpen (BE)**

(56) References cited:
**WO-A1-2007/036003 WO-A2-01/86359**

• **Ribeiro, R.; Koerich, A.L.; Enembreck, F.: "Noise Tolerance in Reinforcement Learning Algorithms" 2 November 2007 (2007-11-02), pages 265-268, XP002600056 DOI: 10.1109/IAT. 2007.94 ISBN: 978-0-7695-3027-7 [retrieved on 2010-09-10]**
• **"Requirements for Collaborative Cognitive RRM (E3 Deliverable D3.1)" 25 July 2008 (2008-07-25), pages 1-77, XP007914843 Retrieved from the Internet: URL:https://ict-e3.eu/project/ deliverables /full_ deliverables/E3_WP3_D3.1_080725.pdf [retrieved on 2010-09-10]**
• **JERZY MARTYNA: "Fuzzy Reinforcement Learning for Routing in Wireless Sensor Networks" COMPUTATIONAL INTELLIGENCE, THEORY AND APPLICATIONS : INTERNATIONAL CONFERENCE 9TH FUZZY DAYS IN DORTMUND, GERMANY, SEPT. 18 - 20, 2006 ; PROCEEDINGS; [ADVANCES IN SOFT COMPUTING], BERLIN [U.A.] : SPRINGER, DE LNKD- DOI:10.1007/3-540-34783-6_61, no. PART 23, 1 January 2006 (2006-01-01), pages 637-645, XP008126555 ISBN: 978-3-540-34780-4 [retrieved on 2006-09-06]**
• **Hany Morcos, Ibrahim Matta, Azer Bestavros: "M2RC -- multiplicative-increase/additive- decrease multipath routing control for wireless sensor networks" 2004, pages 287-288, XP002600058 DOI: 10.1145/1031495.1031539 ISBN: 1-58113-879-2 [retrieved on 2010-09-10]**

## Description

### Field of the Invention

The invention relates to a method of reinforcement learning comprising the steps of perceiving a current state from a set of states of an environment; based on the current state and a policy, choosing an action from a set of actions, wherein the policy associates each state from the set of states with an action from the set of actions; receiving from the environment a new state and a reward; and, based on the reward, optimizing the policy. The invention further relates to a computer program product comprising computer-executable instructions for performing said method when the program is run on a computer, and to a device programmed or configured to perform said method.

### Background

Inspired by related psychological theory, in computer science, reinforcement learning is a sub-area of machine learning concerned with how an agent ought to take actions in an environment so as to maximize some notion of long-term reward. In other words, reinforcement learning algorithms attempt to find a policy that maps states of the world to the applicable actions.

In this context, the environment is typically formulated by means of a finite-state Markov decision process (MDP), that is, a mathematical framework for modeling decision-making in situations where outcomes are partly random and partly under the control of a decision maker. State transition probabilities and reward probabilities in the MDP are typically stochastic but stationary over the course of the problem.

Reinforcement learning differs from so-called supervised learning in that correct input/output pairs are never presented, nor sub-optimal actions explicitly corrected. Further, there is a focus on on-line performance, which involves finding a balance between exploration of uncharted territory and exploitation of current knowledge.

In the art of reinforcement learning, the adaptation to environment change poses a particular challenge. T. Fukuda, D. Funato, and F. Arai disclose a possible solution to this problem in "Recognizing Environmental Change through Multiplex Reinforcement Learning in Group Robot System", Proceedings of the 1999 IEEE/RSJ International Conference on Intelligent Robots and Systems, pp. 972 to 977. Being designed specifically for decision making in autonomic robotics, a major downside of this approach is its limited applicability. Ribeiro, R.; Koerich, A.L.; Enembreck, F.: "Noise Tolerance in Reinforcement Learning Algorithms", describes a method according to the preamble of claim 1.

### Summary

It is an objective of the invention to present an improved approach that allows for smooth and continuous adaptation to environmental change, thus increasing the overall stability of the resulting reinforcement learning system, while being applicable to a wide variety of application scenarios.

This objective is achieved by a method of reinforcement learning comprising the steps of perceiving a current state from a set of states of an environment; based on the current state and a policy, choosing an action from a set of actions, wherein the policy associates each state from the set of states with an action from the set of actions; receiving from the environment a new state and a reward; and, based on the reward and a measure of change of the environment, optimizing the policy. This object further is achieved by a computer program product comprising computer-executable instructions for performing said method when the program is run on a computer, or by a device programmed or configured to perform said method.

A main idea of the invention is the detection of change of the environment. Any optimization of the policy can then be based upon the presence or potency of such change.

As a particular benefit, the proposed approach allows for the application of reinforcement learning to a broad range of domains in which information is incomplete or imprecise. One such domain is the deployment and operation of dynamic service environments, such as is called for in the provisioning of wireless networks.

Further developments of the invention can be gathered from the dependent claims and the following description.

In the following the invention will be explained further making reference to the attached drawing.

To implement reinforcement learning according to an embodiment of the invention, a current state from a set of states of an environment is perceived. Based on this current state and a policy, an action is chosen from a set of actions, the policy associating each state with an action. In response to the action, a new state and a reward are received from the environment. Finally, based on the reward as well as on a measure of change of the environment, the policy is optimized.

**Brief Description of the Figures**

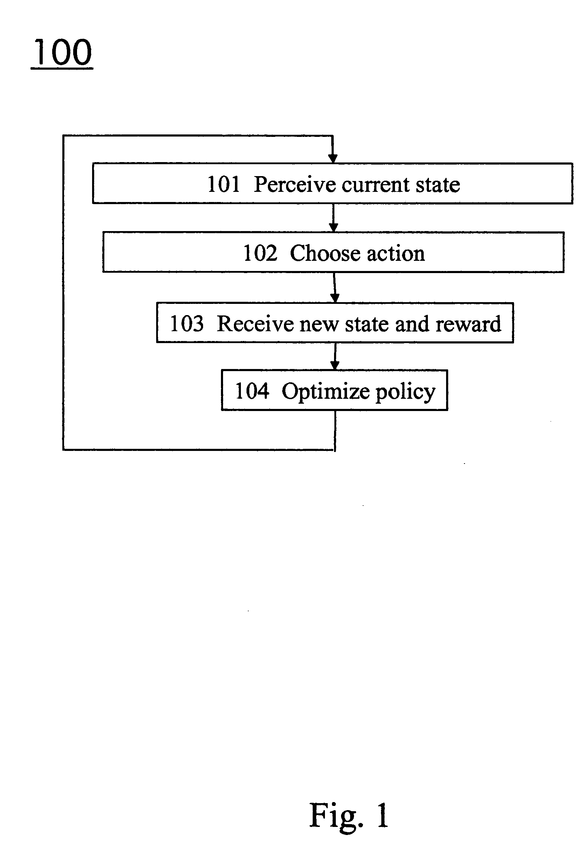

Fig. 1 shows a flowchart depicting a method according to an embodiment of the invention.

**Description of the Embodiments**

In the following, a method according to the invention is elucidated by way of example, referencing Fig. 1.

The flowchart 100 of Fig. 1 comprises a first processing step 101, a second processing step 102, a third processing step 103, a fourth processing step 104, each represented by a rectangle. A flow of control passing through the processing steps 101 to 104 and leading back from the fourth processing step 104 to the first processing step 101 is represented by a set of arrows. An arrow starting at a first symbol and ending at a second symbol indicates that control passes from the first symbol to the second symbol.

In the embodiment at hand, the method is applied by an agent implemented as a computer program.

In the first processing step 101, the agent perceives a current state from a set of states of an environment. To allow for a gradual assessment of individual states, this set takes the form of a fuzzy set. In set theory, by fuzzy set, as introduced by Lotfi A. Zadeh in "Fuzzy Sets", Information and Control, Volume 8, 1965, pages 338 to 353, is meant a set whose elements have degrees of membership described with the aid of a membership function valued in the real unit interval [0, 1].

To reflect multiple input parameters, each state is defined as a tuple of input variables, the set of states thus being the Cartesian product of the universes of discourse of all these variables. To further allow for the use of "crisp" - as opposed to fuzzy - input values, the perception of the current states requires the agent to fuzzify the input variables obtained from the environment by mapping them to membership functions.

In the second processing step 102, the agent chooses an action from a set of actions, the choice being based on the current state received in the first processing step 101 and a policy. This policy associates each state from the set of states with an action from the set of actions. Like the set of states, the set of actions takes the form of a fuzzy set. Accordingly, the policy is based on a fuzzy rule, that is, a conditional statement in the form "IF $x$ is $A$ THEN $y$ is $B$", wherein $x$ and $y$ are linguistic variables and A and B are linguistic values determined by fuzzy sets on their respective universe of discourse. In fuzzy logic, the if-part "$x$ is $A$" of the rule is called the antecedent or premise, while the then-part "$y$ is $B$" of the rule is called the consequent or conclusion. Therefore, each possible state is defined by a unique antecedent of the fuzzy rule underlying the policy. Based on such policy, the agent employs rule-based inference to select the applicable action, that is, it applies the rule to the fuzzified input variables in order to draw a conclusion as to the appropriate response.

More specifically, due to its expressive power as well as easy formalization and interpretability, the agent makes use of Mamdani-type inference. To this end, in a first processing sub-step (not depicted), the agent evaluates the antecedent of each fuzzy rule based on the input variables fuzzified in the first processing step 101. In order to reflect the plurality of membership functions derived during fuzzification, the agent applies a triangular norm (t-norm) to pairs of function values. In mathematics, a t-norm is a kind of binary operation $T: [0, 1] \times [0, 1] \rightarrow [0, 1]$ used in the framework of probabilistic metric spaces and in multi-valued logic, including fuzzy logic, that satisfies the properties of commutativity ($T(a, b) = T(b, a)$), monotonicity ($T(a, b) \leq T(c, d)$ if $a \leq c$ and $b \leq d$), associativity ($T(a, T(b, c)) = T(T(a, b), c)$), and wherein the number 1 acts as an identity element ($T(a, 1) = a$). Prominent examples of t-norms applicable by the agent include the minimum t-norm, product t-norm, Łukasiewicz t-norm, drastic t-norm, Hamacher t-norm, and Schweizer-Sklar t-norm.

This way, the agent, for each fuzzy rule of the policy, calculates what is known in the art of fuzzy logic as a firing strength or degree of fulfillment, that is, the degree to which the antecedent of the fuzzy rule is satisfied. To shape the output function or conclusion of this fuzzy rule given its firing strength and consequent, the agent, in a second processing sub-step (not depicted) of the Mamdani-type inference, applies a fuzzy implication operator. This implication is effected by means of a residuum, that is, a unique binary operation $\Rightarrow$ on [0, 1] such that $T(z, x) \leq y$ if and only if $z \leq (x \Rightarrow y)$ for all $x, y, z$ in [0, 1].

In a third processing sub-step (not depicted) of the Mamdani-type inference, the agent aggregates the conclusions obtained in the second processing sub-step for all fuzzy rules of the policy. To this end, the conclusion of the second processing sub-step being a fuzzy set, the agent makes use of a fuzzy aggregation operation, that is, an operation by which the fuzzy sets obtained by each rule are combined in a suitable way to produce a single fuzzy set. If the number of fuzzy rules of the policy equals $n$ ($2 \leq n$), this operation is defined by a function $h: [0, 1]^n \rightarrow [0, 1]$, such as the maximum function.

In a fourth and last processing sub-step of the Mamdani-type inference, the agent transforms the fuzzy set obtained in the third processing sub-step to obtain a single action from the set of actions. This task involves what is known in the art as defuzzification, that is, the process of producing, given the fuzzy set, a quantifiable result leading to a specific decision. To improve the efficiency of defuzzification, the fuzzy set takes the form of a fuzzy singleton, having a membership function that is unity at one particular point and zero everywhere else.

In the embodiment at hand, each action a from the set of actions *A* available to each state *s* from the set of states *S* is associated with a ranking R(*s, a*), and the agent selects the highest ranking action for the given state:

$$A_{selected,s} = a \leftrightarrow \underset{a'}{Max}\big(R(s,a')\big) = R(s,a)$$

In the third processing step 103, in response to the action chosen in the second processing step 102, the agent receives from the environment a new state. The agent further receives a reward. In reinforcement learning, by reward is meant a real number, maximization of which is considered to be the agent's long-term goal. As described below, the third processing step 103 is iterated, allowing the agent to store a series of rewards received over multiple iterations of the method.

In an intermediate step (not depicted), the agent recalls a plurality of rewards received in previous iterations and, based on these former rewards and the present reward received in the most recent iteration of the third processing step 103, tests the environment for change. The test result allows the agent to differentiate sustainable change from mere noise, that is, any random fluctuation or unexplained variation in reward. Drawing this distinction in turn enables the agent to promptly respond in the former case while operating smoothly and steadily in the latter.

The agent's test for a change of the environment is based upon the notion that any lasting change of the environment should be reflected in at least a plurality of consecutive samples, whereas the effect of noise would be mostly temporary and devoid of persistence. In predictive analysis and machine learning, such change is commonly called concept drift, meaning an alteration of the statistical properties of the reward over time in unforeseen ways. Consequently, the problem solved by this embodiment of the invention is known in the art as concept drift detection or concept change detection. Concept drift cannot be avoided when predicting a complex phenomenon that is not governed by fixed laws of nature. All processes that arise from human activity, such as the deployment and reconfiguration of wireless cellular networks, are likely to experience concept drift.

To reflect the outcome of the test, the agent maintains a learning rate in the real unit interval [0, 1]. In reinforcement learning, this learning rate determines to what extent any newly acquired information will override older information. For an adequate adaptation to any change detected as a result of the test, the agent increases the learning rate through multiplication by a predetermined factor *i* > 1 in response to detecting such change. Conversely, if no substantial change is discovered or only transient noise is perceived, the agent gradually decreases the learning rate by a predetermined difference *d* > 0. In the context of feedback control, such policy is commonly known as a multiplicative increase/additive decrease (MIAD) algorithm. In control theory, the resulting agent would be called a self-tuning system due to its capability of optimizing its own internal running parameters in order to maximize the fulfillment of an objective function; here, the adaptation to the given environment.

To limit the range of allowable learning rates, the agent employs predetermined bounds $\alpha_{lower}$ and $\alpha_{upper}$. Taking these into account, the updated learning rate can be expressed as

$$\alpha(s,a) = \min\left(\alpha_{upper}(s,a), \alpha(s,a) * i\right) \quad \text{if a change is detected and otherwise.}$$
$$\alpha(s,a) = \min\left(\alpha_{lower}(s,a), \alpha(s,a) - d\right)$$

Finally, in the fourth processing step 104, the agent, based on the reward received in the third processing step 103, optimizes the policy. Accordingly, the agent updates the ranking associated with each action. To reflect the different influence of each fuzzy rule on the overall reward, the agent takes into account the firing strength calculated in the second processing step 102 when adapting the ranking. The normalized firing strength, hereinafter called the state strength, is derived as

$$\forall s \in S \qquad Ss(s) \equiv \frac{f_s}{\sum\limits_{s'} f_{s'}} ,$$

$f_s$ representing the firing strength of the state $s$.

To further reflect the test results obtained in the preceding intermediate processing step, the agent further takes into account the learning rate. In particular, a learning rate of 0 will make the agent not learn anything, while a learning rate of 1 will make the agent consider only the most recent information.

To reveal dynamic changes in the environment and provide for continuous adaptation of the model, the agent, having optimized the policy, returns to the first processing step 101 and reiterates until a predetermined stop condition is met.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A computer-implemented method of reinforcement learning for the deployment and reconfiguration of wireless cellular networks comprising the steps of receiving (101) a current state from a set of states of a dynamic service environment, based on the current state and a policy, choosing (102) an action from a set of actions, wherein the policy associates each state from the set of states with an action from the set of actions, in response to the action, receiving (103) from the dynamic service environment a new state from the set of states and a reward, based on the reward, measuring a change and a noise of the dynamic service environment, and, based on the reward, the measure of change and the measure of noise of the dynamic service environment, and a numerical learning rate, optimizing (104) the policy, wherein the step of receiving (103) the reward is iterated, the step of measuring the change of the dynamic service environment is based on a plurality of rewards received (103) in previous iterations, and the step of optimizing (104) is reinforced in response to the measure of change of the dynamic service environment, **characterized in that**, upon measuring the change of the dynamic service environment, the learning rate is increased in response to the measure of change of the dynamic service environment and decreased otherwise in response to the measure of noise of the dynamic service environment.

2. A method according to claim 1, **characterized in that** the learning rate is increased multiplicatively in response to the measure of change of the dynamic service environment and decreased subtractively otherwise.

3. A method according to claim 1 or 2, **characterized in that** the learning rate is decreased subtractively in response to the measure of noise of the dynamic service environment.

## Patentansprüche

1. Computerimplementiertes Verfahren zum bestärkenden Lernen für die Entfaltung und Rekonfiguration eines drahtlosen zellularen Netzwerks, umfassend die Schritte des Empfangens (101) eines aktuellen Status aus einem Satz von Status einer dynamischen Dienstumgebung; des Auswählens (102), auf der Basis eines aktuellen Status und einer Richtlinie, einer Aktion aus einem Satz von Aktionen, wobei die Richtlinie jeden Status aus dem Satz von Status mit einer Aktion aus dem Satz von Aktionen assoziiert; des Empfangens (103), in Reaktion auf die Aktion, eines neuen Status aus dem Satz von Status, und einer Bewertung von der dynamischen Dienstumgebung; des Messens, auf der Basis der Bewertung, einer Änderung und eines Rauschens der dynamischen Dienstumgebung; und, auf der Basis der Bewertung, des Maßes der Änderung und des Maßes des Rauschens der dynamischen Dienstumgebung, und einer digitalen Lernrate, des Optimierens (104) der Richtlinie, wobei der Schritt des Empfangens (103) der Bewertung wiederholt wird, der Schritt des Messens der Änderung der dynamischen Dienstumgebung auf einer Vielzahl von anlässlich von vorherigen Wiederholungen empfangenen (103) Bewertungen basiert, und der Schritt des Optimierens (104) in Reaktion auf das Maß der Änderung der dynamischen Dienstumgebung verstärkt wird, **dadurch gekennzeichnet, dass** die Lernrate nach Messen der Änderung der dynamischen Dienstumgebung in Reaktion auf das Maß der Änderung der dynamischen Dienstumgebung erhöht und anderenfalls in Reaktion auf das Maß des Rauschens der dynamischen Dienstumgebung verringert wird.

2. Verfahren nach Anspruch 1, **dadurch gekennzeichnet, dass** die Lernrate in Reaktion auf das Maß der Änderung der dynamischen Dienstumgebung multiplikativ verringert und anderenfalls substraktiv verringert wird.

3. Verfahren nach Anspruch 1 oder 2, **dadurch gekennzeichnet, dass** die Lernrate in Reaktion auf das Maß des Rauschens der dynamischen Dienstumgebung substraktiv verringert wird.

**Revendications**

1. Procédé mis en oeuvre par un ordinateur d'apprentissage par renforcement pour le déploiement et la reconfiguration de réseaux cellulaires sans fil comprenant les étapes de réception (101) d'un état actuel à partir d'un ensemble d'états d'un environnement dynamique de services, sur la base de l'état actuel et d'une politique, de choix (102) d'une action à partir d'un ensemble d'actions, dans lequel la politique associe chaque état de l'ensemble d'états à une action de l'ensemble d'actions, en réponse à l'action, de réception (103) à partir de l'environnement dynamique de services d'un nouvel état de l'ensemble d'états et d'une récompense, sur la base de la récompense, de mesure d'un changement et d'un bruit de l'environnement dynamique de services, et, sur la base de la récompense, la mesure de changement et la mesure du bruit de l'environnement dynamique de services, et un taux d'apprentissage numérique, d'optimisation (104) de la politique, dans lequel l'étape de réception (103) de la récompense est itérée, l'étape de mesure du changement de l'environnement dynamique de services est basée sur une pluralité de récompenses reçues (103) dans des itérations précédentes, et l'étape d'optimisation (104) est renforcée en réponse à la mesure du changement de l'environnement dynamique de services, **caractérisé en ce que**, lors de la mesure du changement de l'environnement dynamique de services, le taux d'apprentissage est augmenté en réponse à la mesure du changement de l'environnement dynamique de services ou diminué en réponse à la mesure du bruit de l'environnement dynamique de services.

2. Procédé selon la revendication 1, **caractérisé en ce que** le taux d'apprentissage est augmenté par multiplication en réponse à la mesure du changement de l'environnement dynamique de services ou diminué par soustraction.

3. Procédé selon la revendication 1 ou 2, **caractérisé en ce que** le taux d'apprentissage est diminué par soustraction en réponse à la mesure du bruit de l'environnement dynamique de services.

## 100

| 101 | Perceive current state |

| 102 | Choose action |

| 103 | Receive new state and reward |

| 104 | Optimize policy |

# Fig. 1

**EP 2 386 987 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Recognizing Environmental Change through Multiplex Reinforcement Learning in Group Robot System. *Proceedings of the 1999 IEEE/RSJ International Conference on Intelligent Robots and Systems,* 1999, 972-977

- **RIBEIRO, R. ; KOERICH, A.L. ; ENEMBRECK, F.** *Noise Tolerance in Reinforcement Learning Algorithms*
- **LOTFI A. ZADEH.** Fuzzy Sets. *Information and Control,* 1965, vol. 8, 338-353